Europäisches Patentamt

European Patent Office

Office européen des brevets

(19)

(11) Publication number: 0 204 084
A2

# (12) EUROPEAN PATENT APPLICATION

(21) Application number: 86103354.6

(51) Int. Cl.⁴: **B29C 71/04**

(22) Date of filing: 12.03.86

(30) Priority: 18.04.85 US 724696

(43) Date of publication of application:
10.12.86 Bulletin 86/50

(84) Designated Contracting States:
DE FR GB IT

(71) Applicant: THE FIRESTONE TIRE & RUBBER
COMPANY
1200 Firestone Parkway
Akron, Ohio 44317(US)

(72) Inventor: Donatelli, Thomas F.
1732 Forrest Green Drive
Coraopolis Pennsylvania 15108(US)
Inventor: Schonfeld, Steven E.
702 N. Revere Road
Akron Ohio 44313(US)

(74) Representative: Kraus, Walter, Dr. et al
Patentanwälte Kraus, Weisert & Partner
Thomas-Wimmer-Ring 15
D-8000 München 22(DE)

(54) Method for stress relaxation of polyurethanes.

(57) A method for reducing stress relaxation in
polyurethanes comprises the step of subjecting the
polyurethane polymer to a post cure radiation treatment of up to about 12 Mrads.

EP 0 204 084 A2

## METHOD FOR STRESS RELAXATION OF POLYURETHANES

### TECHNICAL FIELD

The present invention provides a method whereby stress relaxation of solid polyurethane elastomers is reduced. Stress relaxation in elastomers is a measure of the decrease in retractive forces acting on a sample that is subjected to a constant deformation or stress. Polyurethane elastomers exhibit high stress relaxation which limits their applicability to various uses. One such example where a problem occurs is in their use as pneumatic tires. While the technology is known to make a polyurethane tire via casting, for instance, the problem occurs upon inflation. When initially inflated, the tire is properly shaped. However, after a period of time the inflation forces from within exceed the retractive forces of the tire allowing it to stretch or "balloon". While reinforcing fibers are of some help, a more worthwhile effort would be to reduce stress relaxation of the polymer.

### BACKGROUND ART

While polyurethanes having a variety of specific compositions are known, little is known of such compositions having reduced stress relaxation or of methods for so doing. One U.S. patent of which we are aware is No. 3,624,045 which describes a class of thermoplastic polyurethane rubbers that can be crosslinked by chemical means and high energy radiation. The result is to impart heat activated memory characteristics upon which a thermoplastic depends in order to be cast and recast at melt temperatures.

Another U.S. patent employing radiation, in the form of microwave energy, for the processing of polyurethanes is No. 4,083,901, owned by the Assignee of record herein. That patent teaches the method of exposing polyurethane prepolymer components and a curative to an amount of microwave energy sufficient to release the curative and thereafter to cure the polymer.

While both patents disclose the use of microwave energy, a form of radiation, neither provides a reduction in stress relaxation as a result.

### SUMMARY OF THE INVENTION

The present invention is directed toward a method for reducing stress relaxation in polyurethanes which comprises the step of subjecting the polyurethane polymer to a post cure radiation treatment of up to about 12 Mrads.

### PREFERRED EMBODIMENT FOR CARRYING OUT THE INVENTION

Polyurethanes which may be treated by the method of the present invention are well known compositions which, for instance, include polyesters, polyethers such as polytetrahydrofuran, polyalkylene glycols such as polypropylene glycol, polycaprolactone and other unsaturated polymeric diols all of which are isocyanate terminated. Isocyanates typically include toluene diisocyanate - (TDI), methylene diisocyanate and Desmodur W, a material provided by Mobay Chemical. Desmodur is a registered trademark of Farbenfabriken Bayer AG for a group of isocyanates and isocyanate prepolymers for urethane coatings and the like. Examples of isocyanate terminated prepolymers may be found in Polyurethanes, Chemistry and Technology, J. H. Saunders and K. C. Frisch, Interscience Publishers, XVI, 1964 pps. 301-03. A common number average molecular weight of such prepolymers ranges from 400 to about 6000 with 1000 being preferred.

Curatives are also well known in the art and are generally heat activated. Typical examples for practice of the present invention include compounds such as Caytur 21 (methylene bis orthochloroaniline), butane diol and para pheylene diamine. In addition to the prepolymer and curative, other ingredients such as plasticizers, e.g., dioctyl phthalate (DOP), fillers, antifoamants and colorants can be added depending upon the desired physical properties of the elastomer.

Similarly, amounts of the components, mixing conditions, curing temperatures and times are all known in the art and need not be specified herein, it being understood that no particular variations are novel to the method being claimed herein. The method is basically applicable to any cured polyurethane elastomer including those resulting from practice of the aforementioned U.S. Pat. No. 4,083,901 which are cured by exposure to microwave energy and absorbed heated therefrom.

Once curing is complete which conventionally occurs in about 5 to 30 minutes at a temperature of about 140° C, the polymer is subjected to high energy radiation. High energy radiation from an electron accelerator operating at about 0,5 to about 1.5 million electron volts can be employed although other sources including X-rays or gamma rays could be substituted therefor. The amount of radiation or absorbed dose to be employed should be greater than about 2 Mrads, up to about 12 Mrads with about 12 Mrads being preferred. It has been found that at these levels the percent decrease in stress relaxation ranges from about 5 percent up to about 30 percent.

As an example for practice of the method herein a polyurethane prepolymer/curative blend was prepared which included 100 parts of Adiprene L367 from Uniroyal Chemical and 34.6 parts of Caytur 21 from Uniroyal Chemical and 3 parts of dioctylphthalate, all parts by weight, based upon 100 parts of polymer. Adiprene is a registered trademark of E. I. duPont deNemours & Co. for a TDI prepolymer of polytetrahydrofuran. Plaques were prepared in a configuration 15 cm x 15 cm x 0.19 cm and cured for one hour at 121° C.

After curing, the plaques were subjected to differing levels of radiation, from 0 to 12 megarads, surface dosage. The radiation source was a commercially available electron accelerator operating at 1.5 million electron volts. As is known to those skilled in the use of accelerators, the material to be irradiated is usually passed under the electron beam, on a conveyor for instance, for varying periods of time. Generally, several seconds will provide several megarads; absorbed dose being directly proportional to time of exposure. The cured, irradiated plaques were then subject to a stress relaxation test which was conducted in the following manner.

Strips measuring 15 cm x 0.64 cm x 0.19 cm were clamped in an instrument such that 10 cm of strip was exposed. The 10 cm long sample was then extended approximately 14 percent to 11.4 cm at 100° C and a force reading was taken at 1.5 seconds after the initial strain. Readings were thereafter taken at one hour intervals for up to 8 hours and a plot of log of force versus log of time was recorded. The slope of these points provided the stress relaxation values. Also calculated was the percent of stress relaxation both of which have been reported in Table I hereinbelow.

## TABLE I
### Stress Relaxation Slopes

| Sample Radiation Dose | 0 Mrad | 4 Mrad | 8 Mrad | 12 Mrad |
|---|---|---|---|---|
| Stress Relaxation Slope | 0.045 | 0.040 | 0.038 | 0.033 |
| % Decrease in Stress Relaxation | -- | 8.9 | 15.6 | 26.7 |

As can readily be determined from Table I, a dose of 0 Mrad, constituting a control, exhibited a slope of 0.045. When subjected to increasing levels of radiation, the slope became less steep indicating a reduction in stress relaxation which is more apparent from the percent decrease values, particularly at 12 Mrads. It can thus be seen that the disclosed invention can reduce stress relaxation in polyurethanes.

As will be apparent to those skilled in the art, substantially any polyurethane elastomers can be treated without departing from the spirit of the invention herein disclosed and described, the scope of the invention being limited solely by the scope of the attached claims. Likewise, the source of radiation is not important so long as it can provide absorbed doses within the ranges disclosed herein.

**Claims**

1. A method for stress relaxation in polyurethanes comprising the step of:

subjecting said polyurethane polymer to a post cure radiation treatment of up to about 12 Mrads.

2. A method for stress relaxation in polyurethanes, as set forth in claim 1, wherein said radiation treatment is provided by high energy electron volts.

3. A method for stress relaxation in polyurethanes, as set forth in claim 2, wherein said radiation treatment is provided at 1.5 million electron volts.

4. A method for stress relaxation in polyurethanes, as set forth in claim 4, wherein said radiation treatment provides 12 Mrads of energy.

5. A method for stress relaxation in polyurethanes, as set forth in claim 1, wherein said polyurethane results from curing of a polyurethane prepolymer selected from the group consisting of isocyanate terminated polyesters, polyethers, polyalkylene glycols, polycaprolactones and unsaturated polymeric diols.

6. A method for stress relaxation in polyurethanes, as set forth in claim 1, wherein said polyurethane composition comprises a toluene diisocyanate prepolymer of tetrahydrofuran.

7. A method for stress relaxation in polyurethanes, as set forth in claim 1, wherein stress relaxation of from about 5 to about 30 percent is obtained.